# EUROPÄISCHE PATENTSCHRIFT

(11) **EP 0 382 945 B1**
(45) Veröffentlichungstag und Bekanntmachung des Hinweises auf die Patenterteilung: **25.08.1993**
(21) Anmeldenummer: 89123892.5
(22) Anmeldetag: 23.12.1989
(51) Int. Cl.: B05B 13/02, B05B 15/12, B28B 11/04

(54) **Verfahren zum Beschichten von Gegenständen**
Method for coating objects
Procédé de revêtement d'objets

(30) Priorität: 18.01.1989 DE 3901302
(43) Veröffentlichungstag der Anmeldung: 22.08.1990
(73) Patentinhaber: Maschinen- und Stahlbau Julius Lippert GmbH & Co., D-92690 Pressath (DE)
(72) Erfinder: Reichl, Helmut, D-8487 Pressath (DE)
(74) Vertreter: LOUIS, PÖHLAU, LOHRENTZ & SEGETH

(56) Entgegenhaltungen:
- FR-A- 1 593 252
- FR-A- 2 298 496

## Beschreibung

Die Erfindung betrifft ein Verfahren zum Beschichten von Gegenständen, insbes. zum Glasieren von Keramikartikeln, wobei die Gegenstände nacheinander schrittweise in Bearbeitungskabinen eingebracht, in jeder Bearbeitungskabine mit jeweils mindestens einer der Schichten versehen und anschliessend aus der jeweiligen Kabine heraus- und in die nachfolgende Kabine hineinbefördert werden, sowie eine Vorrichtung zur Durchführung dieses Verfahrens.

Bekannte Vorrichtungen zum Beschichten von Gegenständen, insbes. zum Glasieren von Keramikartikeln, weisen eine durch alle in einer Reihe hintereinander und voneinander beabstandet angeordneten Bearbeitungskabinen durchlaufende Transporteinrichtungen auf. Während des Aufbringens jeweils mindestens einer der Schichten auf einen Gegenstand verbleibt der Gegenstand mit der Transporteinrichtung, bei der es sich bspw. um ein endloses Förderband handeln kann, stationär in der Bearbeitungskabine. Die Transporteinrichtung wird also zwangsläufig mit Beschichtungsmaterial, insbes. mit Glasur, bespritzt. Bei der schrittweisen Weiterbewegung des Förderbandes durch die verschiedenen Bearbeitungskabinen hindurch wird das Beschichtungsmaterial demzufolge von einer Bearbeitungskabine zur nächsten Bearbeitungskabine verschleppt. Hierbei werden die verschiedenen Beschichtungsmaterialien nacheinander vermischt. Vermischte Beschichtungsmaterialien, insbes. vermischte Glasuren sind jedoch für eine Wiederverwendung unbrauchbar und müssen als teuerer Abfall beseitigt werden.

Als Transporteinrichtungen kommen bislang bspw. Keilriemenförderer, Kettenförderer für Bodenaufbau oder für Hängebahnen, oder Rollenbahnen mit Paletten zur Anwendung.

Der Erfindung liegt die Aufgabe zugrunde, ein Verfahren und eine Vorrichtung zur Durchführung dieses Verfahrens zu schaffen, wobei ein Verschleppen des Beschichtungsmaterial und ein dadurch bedingtes Vermischen verschiedener Beschichtungsmaterialien, insbes. von Glasuren, von einer Bearbeitungskabine zur nachfolgenden Bearbeitungskabine auf einfache Weise vermieden wird.

Diese Aufgabe wird verfahrensgemäss dadurch gelöst, dass jeder Gegenstand mittels einer Transporteinrichtung in einer der Bearbeitungskabinen angeordnet wird, wonach die Transporteinrichtung aus der Bearbeitungskabine entfernt wird, dass dann der Gegenstand mit mindestens einer Schicht versehen wird, und dass anschliessend der mit der Schicht versehene Gegenstand mittels einer zweiten Transporteinreichtung aus der Bearbeitungskabine entfernt wird. Hierbei wird jeder Gegenstand mittels einer eigenen, der einzelnen Bearbeitungskabine zugeordneten Transporteinrichtung in die entsprechende Bearbeitungskabine eingebracht bzw. mittels einer eigenen Transporteinrichtung aus der Bearbeitungskabine entfernt. Da die Beschichtung des Gegenstandes in der jeweiligen Bearbeitungskabine erst dann erfolgt, wenn die den Gegenstand in diese Bearbeitungskabine einbringende Transporteinrichtung aus der Bearbeitungskabine entfernt worden ist, ist ein Verschleppen des Beschichtungsmaterials, insbes. der Glasur, von einer Bearbeitungskabine zur anderen ausgeschlossen. Das ist wiederum Voraussetzung für eine mit dem erfindungsgemässen Verfahren mögliche einfache Glasurrückgewinnung. Bei Durchführung des erfindungsgemässen Verfahrens kann demnach in vorteilhafter Weise eine teuere Abfallbeseitigung infolge Vermischung von Beschichtungsmaterialien, insbes. von Glasuren, vermieden werden.

Die erfindungsgemässe Vorrichtung zur Durchführung des oben beschriebenen Verfahrens mit Bearbeitungskabinen zum Beschichten von Gegenständen, insbes. zum Glasieren von Keramikartikeln, und mit einer Transporteinrichtung zum schrittweise aufeinanderfolgenden Einbringen der Gegenstände in die Bearbeitungskabinen zum Beschichten und zum Entfernen der beschichteten Gegenstände aus den Bearbeitungskabinen ist dadurch gekennzeichnet, dass jeder Bearbeitungskabine mindestens eine eigene Transporteinrichtung zugeordnet ist, die in der Nachbarschaft der Bearbeitungskabine vorgesehen ist, wobei die/jede Transporteinrichtung zwischen einer seitlich neben der Bearbeitungskabine befindlichen Ruheposition und einer in die Bearbeitungskabine hineinreichenden Übergabeposition verstellbar ist. Die/jede Transporteinrichtung befindet sich normalerweise in der seitlich neben der zugehörigen Bearbeitungskabine befindlichen Ruheposition, so dass ein Bespritzen der Transporteinrichtungen mit dem Beschichtungsmaterial, insbes. mit der Glasur, verhindert wird. Die einzelnen Transporteinrichtungen werden nur vorübergehend von der Ruheposition in die Übergabeposition verstellt, um jeweils einen zu beschichtenden Gegenstand, bei dem es sich insbes. um einen Keramikartikel handelt, in die Bearbeitungskabine einzubringen bzw. aus ihr zu entfernen. Sobald der zu beschichtende Gegenstand in die Bearbeitungskabine eingebracht worden ist, wird die Transporteinrichtung wieder von der Übergabeposition in die Ruheposition zurückgestellt, wonach die Beschichtung des in der Bearbeitungskabine befindlichen Gegenstandes erfolgt.

Jeder Bearbeitungskabine sind vorzugsweise zwei Transporteinrichtungen zugeordnet, die auf verschiedenen Seiten der Bearbeitungskabine vorgesehen sind, wobei zwischen benachbarten Bearbeitungskabinen jeweils nur eine einzige Transporteinrichtung angeordnet ist. Die zwischen benachbarten Arbeitskabinen befindliche Transporteinrichtung ist dabei zwischen einer zwischen den benachbarten Arbeitskabinen befindlichen Ruheposition und zwei Übergabepositionen verstellbar, wobei die eine Übergabeposition in der einen Bearbeitungskabine und die zweite Übergabeposition in der benachbarten zweiten Bearbeitungskabine vorgesehen ist.

Um die Vorrichtung platzsparend in einer Linie auszubilden, sind die Transporteinrichtungen vorzugsweise auf entgegengesetzten Seiten der/jeder Bearbeitungskabine vorgesehen.

Als zweckmässig hat es sich erwiesen, wenn die/jede Transporteinrichtung eine zwischen der Ruheposition und der Übergabeposition in einer ersten Raumrichtung bewegliche Übergabeeinrichtung mit einer zum Anheben bzw. Absenken eines Gegenstandes von bzw. auf einen Drehtisch vorgesehenen integrierten Hubeinrichtung und zwei in der ersten Raumrichtung nebeneinander angeordnete Hebeeinrichtungen zum Anheben bzw. Absenken je eines Gegenstandes über bzw. auf die Übergabeeinrichtung aufweist. Eine solche Transporteinrichtung weist einen einfachen Aufbau und eine hohe Betriebszuverlässigkeit auf. Ausserdem ist eine solche Transporteinrichtung auf einfache Weise steuerbar, wozu eine speicherprogrammierbare elektronische Steuerungseinrichtung vorgesehen sein kann.

Jede Transporteinrichtung weist vorzugsweise eine Antriebseinrichtung auf, die zum Bewegen der Übergabeeinrichtung zwischen der Ruhe- und der mindestens einen Übergabeposition bzw. zum Anheben und Absenken eines Gegenstandes von bzw. auf den Drehtisch vorgesehen ist. Die Anhebung bzw. Absenkung kann hierbei pneumatisch, motorisch o.dgl. erfolgen. Diese Antriebseinrichtung kann ein endloses Bandelement aufweisen. Bei diesem endlosen Bandelement kann es sich um einen Riemen, eine Kette, ein Band o.ä. handeln. Das endlose Bandelement jeder Antriebseinrichtung wird vorzugsweise mittels eines zugehörigen eigenen Antriebsmotors angetrieben.

Um den zu beschichtenden Gegenstand, d. h. insbes. den zu glasierenden Keramikartikel, in den einzelnen Bearbeitungskabinen mit Hilfe der einzelnen Transporteinrichtungen passend anordnen zu können, hat es sich als vorteilhaft erwiesen, wenn jede Bearbeitungskabine mit einem der Drehtische zur Aufnahme eines Gegenstandes ausgestattet ist. Die Beschichtung des in einer Bearbeitungskabine befindlichen Gegenstandes kann manuell oder automatisch mittels eines Beschichtungsroboters erfolgen.

Vorzugsweise sind bei der erfindungsgemässen Vorrichtung mehrere Bearbeitungskabinen in einer Reihe voneinander beabstandet vorgesehen. Auf diese Weise lassen sich problemlos komplette Bearbeitungslinien mit mehreren Bearbeitungskabinen realisieren. Desgleichen ist es in Kombination mit z.B. Querfördereinrichtungen und mindestens einer Rücklaufstrecke möglich, wunschgemäss Bearbeitungskreisläufe zu realisieren.

Weitere Einzelheiten, Merkmale und Vorteile ergeben sich aus der nachfolgenden Beschreibung eines in der Zeichnung schematisch dargestellten Ausführungsbeispiels der erfindungsgemässen Vorrichtung zur Durchführung des erfindungsgemässen Verfahrens zum Beschichten von Gegenständen, insbes. zum Glasieren von Keramikartikeln. Es zeigt:
- Fig. 1: in einer schematischen Seitenansicht einen ersten Verfahrensschritt der Vorrichtung,
- Fig. 2: eine der Fig. 1 entsprechende Darstellung, die einen zweiten Verfahrensschritt der Vorrichtung zeigt,
- Fig. 3: eine der Fig. 1 entsprechende Darstellung, die einen dritten Verfahrensschritt der Vorrichtung zeigt,
- Fig. 4: eine der Fig. 1 entsprechende Darstellung, die einen vierten Verfahrensschritt der Vorrichtung verdeutlicht,
- Fig. 5: eine der Fig. 1 entsprechende Darstellung, die einen fünften Verfahrensschritt der Vorrichtung andeutet, und
- Fig. 6: eine Draufsicht auf die Vorrichtung gemäss Figuren 1 bis 5.

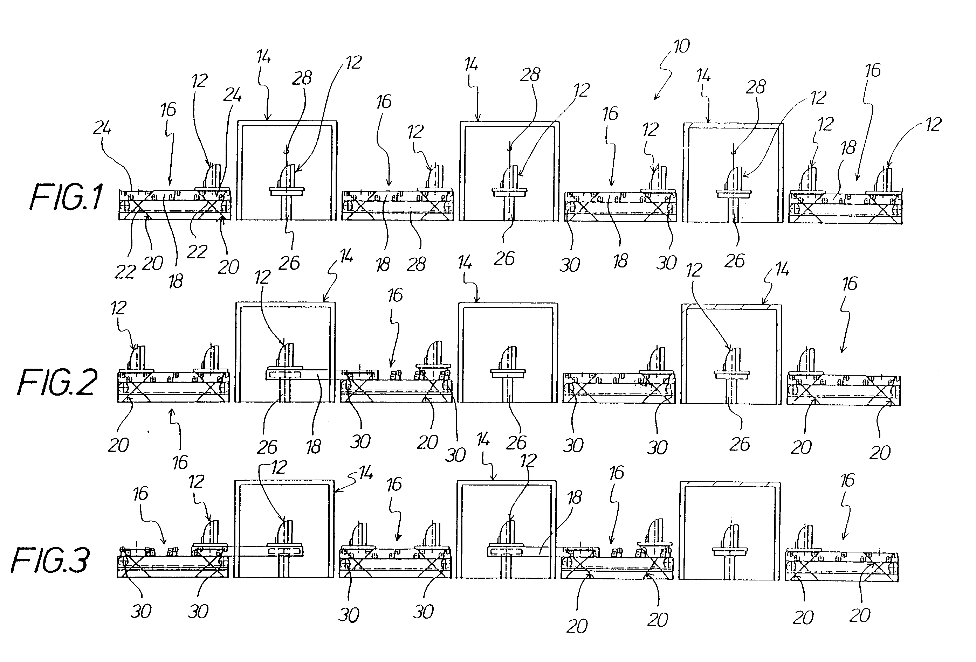

Die Figuren 1 bis 5 zeigen eine Vorrichtung 10 zum Beschichten von Gegenständen 12, bei denen es sich insbes. um Keramikartikel wie Wasch- oder Toilettenbecken o.dgl. handelt. Mit der Bezugsziffer 14 sind drei in einer Reihe hintereinander angeordnete Bearbeitungskabinen bezeichnet, die voneinander beabstandet sind. Vor der ersten in den Figuren 1 bis 5 links angedeuteten Bearbeitungskabine 14, hinter der letzten, in den Figuren 1 bis 5 rechts gezeichneten Bearbeitungskabine 14 und zwischen den einzelnen Bearbeitungskabinen 14 sind Transporteinrichtungen 16 angeordnet, mit welchen die zu beschichtenden, d.h. die zu glasierenden Gegenstände 12 insbes. in Form von Keramikartikeln nacheinander zu den Bearbeitungskabinen 14 transportiert, und von diesen entfernt werden. Zu diesem Zweck weist jede Transporteinrichtung 16 eine zwischen einer Ruheposition und mindestens einer Übergabeposition in einer ersten Raumrichtung bewegliche Übergabeeinrichtung 18 mit einer integrierten Hubeinrichtung zur Bewegung in der Höhenrichtung, um einen der Gegenstände auf dem Drehtisch abstellen bzw. vom Drehtisch anheben zu können und zwei in der ersten Raumrichtung nebeneinander angeordnete Hebeeinrichtungen 20 auf. Die Hebeeinrichtungen 20 sind bspw. mit Scherengestellen 22 und mit einer auf der Oberseite jedes Scherengestelles 22 ausgebildeten Auflage 24 ausgebildet. Die Auflagen 24 der einzelnen Hebeeinrichtungen 20 sind über die zugehörige Übergabeeinrichtung 18 anhebbar bzw. zur Übergabeeinrichtung 18 absenkbar, so dass es bei angehobener Hebeeinrichtung 20 möglich ist, die zugehörige Übergabeeinrichtung 18 in der ersten horizontalen Raumrichtung wunschgemäss zwischen der Ruheposition und der Übergabeposition zu verstellen.

Jede der Bearbeitungskabinen 14 weist einen der Drehtische 26 auf, auf dem der zu beschichtende, d.h. der zu glasierende Gegenstand 12 bspw. in Gestalt eines Keramikartikels anordenbar und um eine Vertikalachse 28 verdrehbar ist. Die Beschichtung des in einer Bearbeitungskabine 14 befindlichen Gegenstandes 12 kann, wie bereits erwähnt wurde, bspw. manuell oder mittels eines an sich bekannten Beschichtungsroboters erfolgen.

In Fig. 1 ist eine Grundstellung der Vorrichtung 10 gezeichnet, in welcher jede Bearbeitungskabine 14 mit einem zu beschichtenden Gegenstand 12 bestückt ist. Ausserdem ist jeweils der rechte Platz jeder Transporteinrichtung 16, d.h. jeweils die in Transportrichtung der Gegenstände 12 rechte Hebeeinrichtung 20 jeder Transporteinrichtugn 16 mit einem der Gegenstände 12 bestückt. Der jeweilige linke Stellplatz jeder Transporteinrichtung 16 mit Ausnahme der ausgangsseitigen rechten Transporteinrichtung 16 ist nicht mit einem Gegenstand 12 bestückt. In Fig. 2 ist ein zweiter Arbeitsschritt schematisch angedeutet, in welchem mit Hilfe der zwischen der linken und der mittleren Bearbeitungskabine 14 befindlichen Transporteinrichtung 16 der in der linken Bearbeitungskabine 14 befindliche Gegenstand 12 aus der linken Kabine 14 entnommen wird. Zu diesem Zweck wird die Übergabeeinrichtung 18 der genannten zweiten Transporteinrichtung 16 von ihrer Ruheposition in die linke Übergabeposition bis zum Drehtisch 26 der linken ersten Bearbeitungskabine 14 bewegt. Gleichzeitig ist die rechte Hebeeinrichtung 20 dieser zweiten Transporteinrichtung 16 angehoben, um die Verschiebung der erwähnten Übergabeeinrichtung 18 von der Ruheposition in die linke Übergabeposition zu ermöglichen. Vorher, gleichzeitig oder nachher kann auf der linken Seite der linken ersten Transporteinrichtung 16 auf der zugehörigen Hebeeinrichtung 20 ein weiterer Gegenstand 12 angeordnet werden. Gleichzeitig vorher oder nachher kann der äusserst rechte fertig beschichtete Gegenstand 12 von der äusserst rechten Transporteinrichtung 16 abgenommen werden. In der in Fig.2 gezeichneten Übergabeposition der von der linken Seite aus gezählten zweiten Übergabeeinrichtung 18 wird der in der linken ersten Bearbeitungskabine 14 befindliche Gegenstand 12 aus der Bearbeitungskabine 14 durch Bewegung der Übergabeeinrichtung 18 nach rechts aus der linken ersten Bearbeitungskabine 14 herausbewegt. Anschliessend kann mit Hilfe der linken ersten Transporteinrichtung 16 ein weiterer Gegenstand 12 in die linke erste Bearbeitungskabine 14 transportiert werden. Gleichzeitig, vorher oder nachher, wird der in der mittleren Bearbeitungskabine 14 befindliche Gegenstand 12 mit Hilfe der zwischen der mittleren und der rechten Bearbeitungskabine 14 befindlichen Transporteinrichtung 16 aus der mittleren Bearbeitungskabine 14 entfernt. Dazu wird die Übergabeeinrichtung 18 dieser dritten Transporteinrichtung 16 von der in Fig. 2 gezeichneten Ruheposition nach links in die in der mittleren Bearbeitungskabine 14 befindliche Übergabeposition bewegt, anschliessend der in der mittleren Bearbeitungskabine 14 befindliche Gegenstand 12 auf der Übergabeeinrichtung 18 abgestellt und diese Übergabeeinrichtung 18 nachfolgend aus der mittleren Bearbeitungskabine 14 heraus in die Ruheposition zurückgestellt. Zu diesem Zweck ist es wieder erforderlich, die rechte Hebeeinrichtung 20 dieser dritten Transporteinrichtung 16 anzuheben.

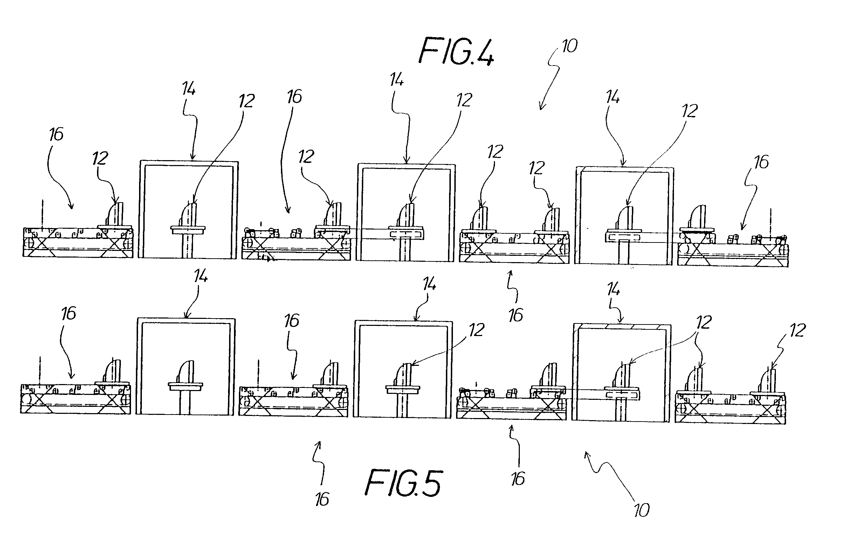

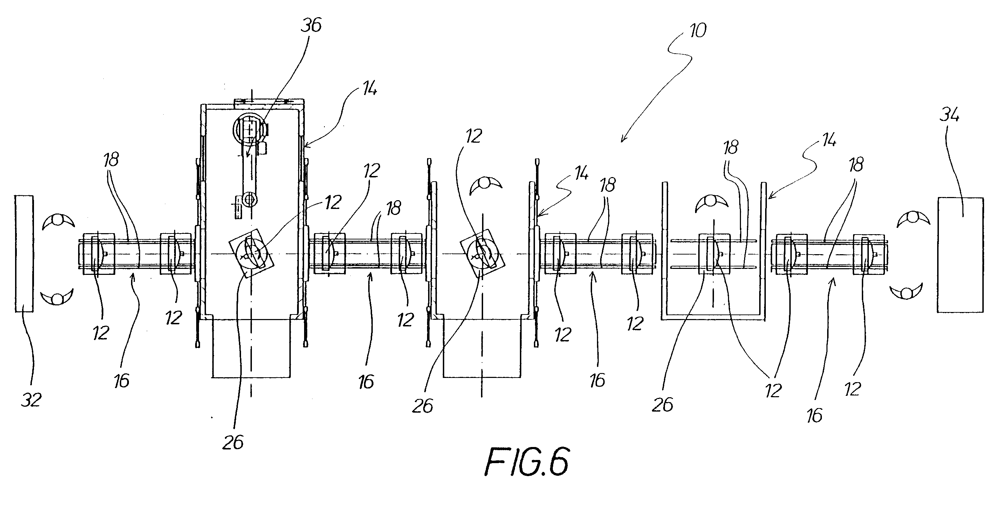

Fig. 4 zeigt einen vierten Arbeitsschritt, in welchem in die mittlere Bearbeitungskabine 14 ein Gegenstand 12 eingestellt wird, während gleichzeitig oder vorher bzw. nachher die rechte Bearbeitungskabine 14 mit Hilfe der rechten äusseren Transporteinrichtung 16 entleert wird. Fig. 5 zeigt eine Stellung der Vorrichtung 10, in welcher die rechte Bearbeitungskabine 14 von der vorletzten Transporteinrichtung 16 aus mit einem Gegenstand 12 befüllt wird.

Aus den Figuren 1 bis 5 ist ersichtlich, dass während der Beschichtung der Gegenstände 12 die zu den einzelnen Bearbeitungskabinen 14 zugehörigen Übergabeeinrichtungen 18 der Transporteinrichtungen 16 sich in den Ruhepositionen ausserhalb der Bearbeitungskabinen 14 befinden. Dadurch wird ein Verschleppen des Beschichtungsmaterials, bei dem es sich insbes. um ein Glasurmaterial handeln kann, vermieden.

Zur Verschiebung der einzelnen Übergabeeinrichtungen 18 zwischen der Ruheposition und der rechten bzw. linken Übergabeposition weist jede Transporteinrichtung 16 eine Antriebseinrichtung 28 auf, die mit einem endlosen Band versehen ist, das um zwei Umlenkrollen 30 umgelenkt ist. Mindestens eine Umlenkrolle 30 jeder Antriebseinrichtung 28 ist mit einem (nicht gezeichneten) Antriebsmotor verbunden.Die integrierte Hubenrichtung ist zum Anheben bzw. Absenken eines Gegenstandes 12 vom bzw. auf den Drehtisch 26 eine pneumatische, motorische o.ä.Ausrüstung.

Die in den Figuren 1 bis 5 gezeichneten aufeinanderfolgenden Verfahrensschritte können bei geeigneter Ablaufsteuerung gegebenenfalls zum Teil simultan ablaufen, so dass die Totzeiten auf ein Minimum beschränkt sind. Zur Ablaufsteuerung kann eine (nicht gezeichnete) speicherprogrammierbare elektronische Steuerungseinrichtung dienen, mit welcher die einzelnen Transporteinrichtungen 16 angesteuert werden.

Fig. 6 zeigt in einer Draufsicht eine Aufgabeeinrichtung 32, drei in einer Reihe hintereinander angeordnete Bearbeitungskabinen 14, eine Abgabestation 34, von welcher die fertigbeschichteten Gegenstände 12 abgenommen und aus der Vorrichtung 10 entfernt werden, sowie Transporteinrichtungen 16, die zwischen der Aufgabeeinrichtung 32 und der linken ersten Bearbeitungskabine 14, zwischen den einzelnen Bearbeitungskabinen 14 und zwischen der letzten Bearbeitungskabine 14 und der Abgabesation 34 angeordnet sind. Mit der Bezugsziffer 26 sind die in den Bearbeitungskabinen 14 befindlichen Drehtische bezeichnet, wobei auf jedem der Drehtische 26 ein zu beschichtender Gegenstand 12 angeordnet ist. In der linken ersten Bearbeitungskabine 14 ist eine Beschichtungseinrichtung 36 in Form eines Beschichtungsroboters angedeutet. Aus dieser Figur ist ersichtlich, dass jede Transporteinrichtung 16 eine Übergabeeinrichtung 18 aufweist, die zwei nebeneinander parallel verlaufende Trägerelemente aufweist.

## Patentansprüche

1. Verfahren zum Beschichten von Gegenständen (12), insbes. zum Glasieren von Keramikartikeln, wobei die Gegenstände (12) nacheinander schrittweise in Bearbeitungskabinen (14) eingebracht, in jeder Kabine (14) mit jeweils mindestens einer der Schichten versehen und anschliessend aus der Kabine (14) heraus- und in die nachfolgende Kabine (14) hineinbefördert werden,
**dadurch gekennzeichnet,**
dass jeder Gegenstand (12) mittels einer Transporteinrichtung (16) in einer der Bearbeitungskabinen (14) angeordnet wird, wonach die Transporteinrichtung (16) aus der Bearbeitungskabine (14) entfernt wird, dass dann der Gegenstand (12) mit mindestens einer Schicht versehen wird, und dass anschliessend der mit der Schicht versehene Gegenstand (12) mittels einer zweiten Transporteinrichtung (16) aus der Bearbeitungskabine (14) entfernt wird.

2. Vorrichtung zur Durchführung des Verfahrens nach Anspruch 1 mit Bearbeitungskabinen (14) zum Beschichten von Gegenständen (12), insbes. zum Glasieren von Keramikartikeln, und mit einer Transporteinrichtung (16) zum schrittweise aufeinanderfolgenden Einbringen der Gegenstände (12) in die Bearbeitungskabinen (14) zum Beschichten und zum Entfernen der beschichteten Gegenstände (12) aus den Bearbeitungskabinen (14),
**dadurch gekennzeichnet,**
dass jeder Bearbeitungskabine (14) mindestens eine eigene Transporteinrichtung (16) zugeordnet ist, die in der Nachbarschaft der Bearbeitungskabine (14) vorgesehen ist, wobei die /jede Transporteinrichtung (16) zwischen einer seitlich neben der Bearbeitungskabine (14) befindlichen Ruheposition und einer in die Bearbeitungskabine (14) hineinreichenden Übergabeposition verstellbar ist.

3. Vorrichtung nach Anspruch 2,
**dadurch gekennzeichnet**,
dass jeder Bearbeitungskabine (14) zwei Transporteinrichtungen (16) zugeordnet sind, die auf unterschiedlichen Seiten der Bearbeitungskabine (14) vorgesehen sind, wobei zwischen benachbarten Bearbeitungskabinen (14) jeweils eine einzige Transporteinrichtung (16) angeordnet ist.

4. Vorrichtung nach Anspruch 3,
**dadurch gekennzeichnet,**
dass die Transporteinrichtungen (16) auf entgegengesetzten Seiten der/jeder Bearbeitungskabine (14) vorgesehen sind.

5. Vorrichtung nach einem der Ansprüche 2 bis 4,
**dadurch gekennzeichnet,**
dass die/jede Transporteinrichtung (16) eine zwischen der Ruheposition und der Übergabeposition in einer ersten Raumrichtung bewegliche Übergabeeinrichtung (18) mit einer zum Anheben bzw. Absenken eines Gegenstandes (12) von bzw. auf einen Drehtisch vorgesehen und zwei in der ersten Raumrichtung nebeneinander angeordnete Hebeeinrichtungen (20) zum Anheben bzw. Absenken je eines Gegenstandes (12) über bzw. auf die Übergabeeinrichtung (18) aufweisen.

6. Vorrichtung nach einem der Ansprüche 2 bis 5,
**dadurch gekennzeichnet,**
dass jede Transporteinrichtung (16) eine Antriebseinrichtung (28) aufweist, die zum Bewegen der Übergabeeinrichtung (18) zwischen der Ruhe- und der Übergabeposition bzw. zum Anheben und Absenken eines Gegenstandes (12) von bzw. auf einen Drehtisch (26) vorgesehen ist.

7. Vorrichtung nach Anspruch 6,
**dadurch gekennzeichnet,**
dass die Antriebseinrichtung (28) ein endloses Bandelement aufweist.

8. Vorrichtung nach einem der Ansprüche 2 bis 7,
**dadurch gekennzeichnet,**
dass jede Bearbeitungskabine (14) mit einem Drehtisch (26) zur Aufnahme eines Gegenstandes (12) ausgestattet ist.

9. Vorrichtung nach einem der Ansprüche 2 bis 8,
**dadurch gekennzeichnet,**
dass mehrere Bearbeitungskabinen (14) in einer Reihe voneinander beabstandet vorgesehen sind.

## Claims

1. Method for coating objects (12), in particular for glazing ceramic articles, the objects (12) being introduced progressively one after the other into finishing booths (14), being provided in each booth (14) with in each case at least one of the coatings and then being conveyed out of the booth (14) and into the following booth (14), characterised in that each object (12) is disposed by means of a transporting device (16) in one of the finishing booths (14), after which the transporting device (16) is removed from the finishing booth (14), in that the object (12) is then provided with at least one coating, and in that the object (12) provided with the coating is then removed from the finishing booth (14) by means of a second transporting device (16).

2. Apparatus for carrying out the method according to Claim 1, having finishing booths (14) for the coating of objects (12), in particular for glazing ceramic articles, and having a transporting device (16) for introducing the objects (12) progressively one after the other into the finishing booths (14) in order to be coated and for removing the coated objects (12) from the finishing booths (14), characterised in that each finishing booth (14) is assigned at least one transporting device (16) of its own provided in the vicinity of the finishing booth (14), the/each transporting device (16) being adjustable between a rest position situated alongside the finishing booth (14) and a delivery position reaching into the finishing booth (14).

3. Apparatus according to Claim 2, characterised in that each finishing booth (14) is assigned two transporting devices (16) provided on different sides of the finishing booth (14), a single transporting device (16) being disposed in each case between adjacent finishing booths (14).

4. Apparatus according to Claim 3, characterised in that the transporting devices (16) are provided on opposite sides of the/each finishing booth (14).

5. Apparatus according to one of Claims 2 to 4, characterised in that the/each transporting device (16) exhibits a transfer device (18) which is movable in a first spatial direction between the rest position and the delivery position, having a lifting device (20) provided in order to raise or lower an object (12) from or onto a turntable and having two lifting devices (20) disposed side by side in the first spatial direction each for raising or lowering an object (12) over or onto the transfer device (18).

6. Apparatus according to one of Claims 2 to 5, characterised in that each transporting device (16) exhibits a drive device (28) which is provided in order to move the transfer device (18) between the rest and delivery positions or to raise and lower an object (12) from or onto a turntable (26).

7. Apparatus according to Claim 6, characterised in that the drive device (28) exhibits a continuous belt element.

8. Apparatus according to one of Claims 2 to 7, characterised in that each finishing booth (14) is equipped with a turntable (26) for the reception of an object (12).

9. Apparatus according to one Of Claims 2 to 8, characterised in that a plurality of finishing booths (14) are provided, spaced apart in a row.

## Revendications

1. Procédé de revêtement d'objets (12), destiné an particulier à la vitrification d'articles en céramique, dans lequel les objets (12) sont introduits par étapes et l'un après l'autre dans des cabines de traitement (14), puis recouverts dans chacune des cabines (14) d'au moins une couche, et enfin transportés hors de la cabine (14) et acheminés dans la suivante, caractérisé an ce que chaque objet (12) est placé dans une des cabines de traitement (14) au moyen d'un dispositif de transport (16), après quoi ce dernier est évacué de la cabine (14), l'objet (12) étant ensuite revêtu d'au moins une couche, et étant finalement évacué de la cabine (14) de traitement au moyen d'un second dispositif de transport (16).

2. Système pour la réalisation du procédé selon la revendication 1, comprenant des cabines de traitement (14) destinées au revêtement d'objets (12), en particulier à la vitrification d'articles en céramique, et un dispositif de transport (16) destiné à l'acheminement successif des objets (12) dans les cabines de traitement (14) pour l'opération de revêtement et à leur évacuation hors de la cabine (14) munis de leur revêtement, caractérisé en ce que chaque cabine de traitement (14) comporte son propre dispositif de transport (16), placé à proximité de la cabine (14), de sorte que le/chaque dispositif de transport (16) est mobile entre une position de repos située latéralement à côté de la cabine (14) et une position de transmission à l'intérieur de celle-ci.

3. Système selon la revendication 2, caractérisé en ce que chaque cabine de traitement (14) comporte deux dispositifs de transport (16), qui sont placés à des côtés différents de la cabine (14), de manière qu'entre deux cabines (14) consécutives, il n'y ait qu'un unique dispositif de transport (16).

4. Système selon la revendication 3, caractérisé en ce que les dispositifs de transport (16) sont positionnés suivant des côtés opposés de la/chaque cabine de traitement (14).

5. Système selon l'une des revendications 2 à 4, caractérisé en ce que le/chaque dispositif de transport (16) comporte un système de transmission (18) mobile dans une première zone entre les positions de repos et de transmission, avec un premier dispositif de levage (20) pour monter ou descendre un objet (12) respectivement sur ou à partir d'une table tournante et deux autres positionnés l'un à côté de l'autre dans la première zone pour monter ou descendre un objet (12) respectivement au-dessus et sur le système de transmission (18).

6. Dispositif selon l'une quelconque des revendications 2 à 5, caractérisé en ce que chaque dispositif de transport (16) comporte un système d'entraînement (28), prévu pour mouvoir le système de transmission (18) entre les positions de repos et de transmission pour monter ou descendre un objet (12) respectivement sur ou à partir d'une table tournante (26).

7. Dispositif selon la revendication 6, caractérisé en ce que le système d'entraînement est un élément à bande sans fin.

8. Dispositif selon l'une quelconque des revendications 2 à 7, caractérisé en ce que chaque cabine de traitement (14) est équipée d'une table tournante (26) destinée à recevoir un objet (12).

9. Dispositif selon l'une quelconque des revendications 2 à 8, caractérisé en ce que plusieurs cabines de traitement (14) sont agencées en rang à distance l'une de l'autre.
